# EUROPEAN PATENT APPLICATION

(11) **EP 4 738 086 A1**
(43) Date of publication of application: **06.05.2026**
(21) Application number: 24874954.1
(22) Date of filing: 02.10.2024
(51) Int. Cl.: G06F 3/04847, G06F 3/0488, G06F 3/041, G06F 3/0481, G06F 3/0486, G06F 3/04845

(54) **ELECTRONIC DEVICE FOR DISPLAYING OBJECT, AND CONTROL METHOD THEREFOR**

(30) Priority: 05.10.2023 KR 20230132627; 11.12.2023 KR 20230178821
(71) Applicant: Samsung Electronics Co., Ltd., Suwon-si, Gyeonggi-do 16677 (KR)
(72) Inventor: CHA, Sojeong, Suwon-si Gyeonggi-do 16677 (KR); PARK, Gyeongtae, Suwon-si Gyeonggi-do 16677 (KR); PARK, Sunghwan, Suwon-si Gyeonggi-do 16677 (KR); SUNG, Jiyeon, Suwon-si Gyeonggi-do 16677 (KR); SEO, Heungkyo, Suwon-si Gyeonggi-do 16677 (KR); JUNG, Sukin, Suwon-si Gyeonggi-do 16677 (KR); CHOI, Ikhee, Suwon-si Gyeonggi-do 16677 (KR); LEE, Eunah, Suwon-si Gyeonggi-do 16677 (KR)
(74) Representative: HGF
(86) International application number: PCT/KR2024/015005
(87) International publication number: WO 2025/075398

(57) **Abstract**

An electronic device is provided. The electronic device may comprise a touch screen, a processor, and a memory for storing instructions that, when individually or collectively executed by at least one processor, cause the electronic device to: display, on the touch screen, a first object that indicates the adjustable range of a first setting value and a first indicator that displays, on the first object, information about the first setting value at a first position with respect to the first indicator; display, on the touch screen, a second object that indicates the adjustable range of a second setting value and a second indicator that displays, on the second object, information about the second setting value; increase the size of the first indicator while a touch input for changing the position of the first indicator with respect to the first object is maintained on the first indicator in order to change the first setting value; display the information about the first setting value corresponding to the changed position of the first indicator at a second position with respect to the first indicator; and change the visual shape of the second object and/or the second indicator while the size of the first indicator increases in response the touch input being maintained on the first indicator.

## Description

### [TECHNICAL FIELD]

The disclosure relates to an electronic device for displaying an object and a method for controlling the same.

### [BACKGROUND ART]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

Further, the electronic device provides various graphic user interfaces (GUIs) for interaction with the user through the display.

The above information is presented as background information only to assist with an understanding of the disclosure. No determination has been made, and no assertion is made, as to whether any of the above might be applicable as prior art with regard to the disclosure.

### [DISCLOSURE OF INVENTION]

### [SOLUTION TO PROBLEMS]

Aspects of the disclosure are to address at least the above-mentioned problems and/or disadvantages and to provide at least the advantages described below. Accordingly, an aspect of the disclosure is to provide an electronic device for displaying object and method for controlling the same.

Additional aspects will be set forth in part in the description which follows and, in part, will be apparent from the description, or may be learned by practice of the presented embodiments.

In accordance with an aspect of the disclosure, an electronic device is provided. The electronic device includes a touchscreen, at least one processor, and memory storing instructions that, when executed by the at least one processor, cause the electronic device to perform following operations.

According to an embodiment, the instructions, when executed by the at least one processor individually or collectively, cause the electronic device to display, on the touchscreen, a first object indicating an adjustable range of a first setting value and a first indicator, on the first object, for displaying information about the first setting value at a first position for the first indicator.

According to an embodiment, the first indicator may be movable with respect to the first object to adjust the first setting value.

According to an embodiment, the instructions, when executed by the at least one processor individually or collectively, cause the electronic device to display, on the touchscreen, a second object indicating an adjustable range of a second setting value and a second indicator, on the second object, displaying information about the second setting value.

According to an embodiment, the second indicator may be movable with respect to the second object to adjust the second setting value.

According to an embodiment, the instructions, when executed by the at least one processor individually or collectively, cause the electronic device to, while a touch input is maintained on the first indicator to change a position of the first indicator for the first object to change the first setting value, increase a size of the first indicator and display the information about the first setting value corresponding to a changed position of the first indicator, at a second position for the first indicator.

According to an embodiment, the second position may be different from the first position to avoid being hidden by the touch input.

According to an embodiment, the instructions, when executed by the at least one processor individually or collectively, cause the electronic device to, while the size of the first indicator is increased in response to the touch input being maintained on the first indicator, change a visual appearance of at least one of the second object or the second indicator.

In accordance with an aspect of the disclosure, a method for controlling an electronic device is provided. The method includes displaying, on a touchscreen of the electronic device, a first object indicating an adjustable range of a first setting value and a first indicator, on the first object, for displaying information about the first setting value at a first position for the first indicator.

According to an embodiment, the first indicator may be movable with respect to the first object to adjust the first setting value.

According to an embodiment, the method for controlling the electronic device may comprise displaying, on the touchscreen, a second object indicating an adjustable range of a second setting value and a second indicator, on the second object, displaying information about the second setting value.

According to an embodiment, the second indicator may be movable with respect to the second object to adjust the second setting value.

According to an embodiment, the method for controlling the electronic device may comprise, while a touch input is maintained on the first indicator to change a position of the first indicator for the first object to change the first setting value, increasing a size of the first indicator.

According to an embodiment, the method for controlling the electronic device may comprise displaying the information about the first setting value corresponding to the changed position of the first indicator, at a second position for the first indicator.

According to an embodiment, the second position may be different from the first position to avoid being hidden by the touch input.

According to an embodiment, the method for controlling the electronic device may comprise, while the size of the first indicator is increased in response to the touch input being maintained on the first indicator, changing a visual appearance of at least one of the second object or the second indicator.

In accordance with an aspect of the disclosure, one or more non-transitory computer-readable recording media storing one or more computer programs including computer-executable instructions that, when executed by one or more processors of an electronic device individually or collectively, cause the electronic device to perform operations is provided.

The operations may include displaying, on a touchscreen, a first object indicating an adjustable range of a first setting value and a first indicator, on the first object, for displaying information about the first setting value at a first position for the first indicator.

According to an embodiment, the first indicator may be movable with respect to the first object to adjust the first setting value.

According to an embodiment, the one or more programs may comprise instructions enabling the electronic device to display, on the touchscreen, a second object indicating an adjustable range of a second setting value and a second indicator, on the second object, displaying information about the second setting value.

According to an embodiment, the second indicator may be movable with respect to the second object to adjust the second setting value.

According to an embodiment, the one or more programs may comprise instructions enabling the electronic device to, while a touch input is maintained on the first indicator to change a position of the first indicator for the first object to change the first setting value, increase a size of the first indicator and display the information about the first setting value corresponding to a changed position of the first indicator, at a second position for the first indicator.

According to an embodiment, the second position may be different from the first position to avoid being hidden by the touch input.

According to an embodiment, the one or more programs may comprise instructions enabling the electronic device to, while the size of the first indicator is increased in response to the touch input being maintained on the first indicator, change a visual appearance of at least one of the second object or the second indicator.

Other aspects, advantages, and salient features of the disclosure will become apparent to those skilled in the art from the following detailed description, which, taken in conjunction with the annexed drawings, discloses various embodiments of the disclosure.

### [BRIEF DESCRIPTION OF DRAWINGS]

The above and other aspects, features, and advantages of certain embodiments of the disclosure will be more apparent from the following description taken in conjunction with the accompanying drawings, in which:
FIG. 1 is a block diagram illustrating an electronic device in a network environment according to an embodiment of the disclosure;
FIG. 2 is a flowchart illustrating an operation of changing and displaying an object and/or an indicator based on a touch input, of an electronic device according to an embodiment of the disclosure;
FIG. 3A is a view illustrating an object and an indicator for adjusting a setting value, of an electronic device according to an embodiment of the disclosure;
FIG. 3B is a view illustrating an indicator changed according to a touch input, of an electronic device according to an embodiment of the disclosure;
FIG. 3C is a view illustrating an indicator changed according to a touch input, of an electronic device according to an embodiment of the disclosure;
FIG. 4A is a view illustrating an operation of displaying an indicator according to a touch input through an electronic pen, of an electronic device according to an embodiment of the disclosure;
FIG. 4B is a view illustrating an operation of displaying an indicator according to a touch input through an electronic pen, of an electronic device according to an embodiment of the disclosure;
FIG. 4C is a view illustrating an operation of displaying an indicator according to a touch input through a finger, of an electronic device according to an embodiment of the disclosure;
FIG. 4D is a view illustrating an indicator enlarged by a touch input, of an electronic device according to an embodiment of the disclosure;
FIG. 4E is a view illustrating an indicator enlarged by a touch input, of an electronic device according to an embodiment of the disclosure;
FIG. 5A is a view illustrating a case where an overlap with an adjacent indicator occurs based on enlargement of an indicator, of an electronic device according to an embodiment of the disclosure;
FIG. 5B is a view illustrating an operation of determining whether an enlarged indicator and an adjacent indicator overlap, of an electronic device according to an embodiment of the disclosure;
FIG. 5C is a view illustrating an operation of changing an adjacent indicator based on enlargement of an indicator, of an electronic device according to an embodiment of the disclosure;
FIG. 5D is a view illustrating an operation of changing an adjacent indicator and an adjacent object based on enlargement of an indicator, of an electronic device according to an embodiment of the disclosure;
FIG. 6A is a view illustrating a case where an overlap with an adjacent indicator does not occur based on enlargement of an indicator, of an electronic device according to an embodiment of the disclosure;
FIG. 6B is a view illustrating a case where an enlarged indicator and a movable area of an adjacent indicator overlap, of an electronic device according to an embodiment of the disclosure;
FIG. 6C is a view illustrating an operation of changing an adjacent indicator based on enlargement of an indicator, of an electronic device according to an embodiment of the disclosure;
FIG. 7 is a view illustrating an operation of changing positions of an adjacent object and an adjacent indicator based on enlargement of an indicator, of an electronic device according to an embodiment of the disclosure;
FIG. 8 is a view illustrating an operation of changing an indicator and an adjacent indicator when an area other than an indicator among objects is selected, of an electronic device according to an embodiment of the disclosure;
FIG. 9 is a view illustrating an operation of changing an indicator when receiving a drag input departing from an object after selecting an indicator on the object, of an electronic device according to an embodiment of the disclosure;
FIG. 10 is a view illustrating an operation of determining a direction of enlarging an indicator based on a direction of a touch input, of an electronic device according to an embodiment of the disclosure;
FIG. 11A is a view illustrating an operation of displaying an object and an indicator, of an electronic device according to an embodiment of the disclosure;
FIG. 11B is a view illustrating an indicator enlarged by a touch input, of an electronic device according to an embodiment of the disclosure;
FIG. 11C is a view illustrating an indicator enlarged by a touch input, of an electronic device according to an embodiment of the disclosure;
FIG. 11D is a view illustrating an operation of receiving a multi-touch in an enlarged state of an indicator based on a touch input, of an electronic device according to an embodiment of the disclosure; and
FIG. 11E is a view illustrating an operation of changing a direction of enlarging an indicator when a multi-touch is received in an enlarged state of an indicator based on a touch input, of an electronic device according to an embodiment of the disclosure.

The same reference numerals are used to represent the same elements throughout the drawings.

### [MODE FOR THE INVENTION]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth^{®} chip, a global positioning system (GPS) chip, a near field communication (NFC) chip, connectivity chips, a sensor controller, a touch controller, a finger-print sensor controller, a display driver integrated circuit (IC), an audio CODEC chip, a universal serial bus (USB) controller, a camera controller, an image processing IC, a microprocessor unit (MPU), a system on chip (SoC), an IC, or the like.

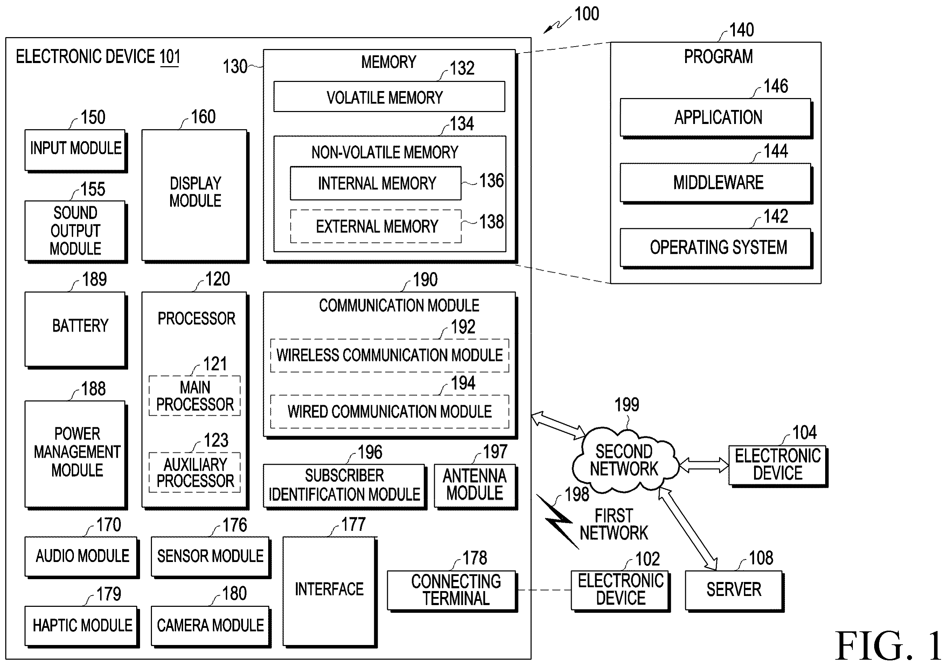

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

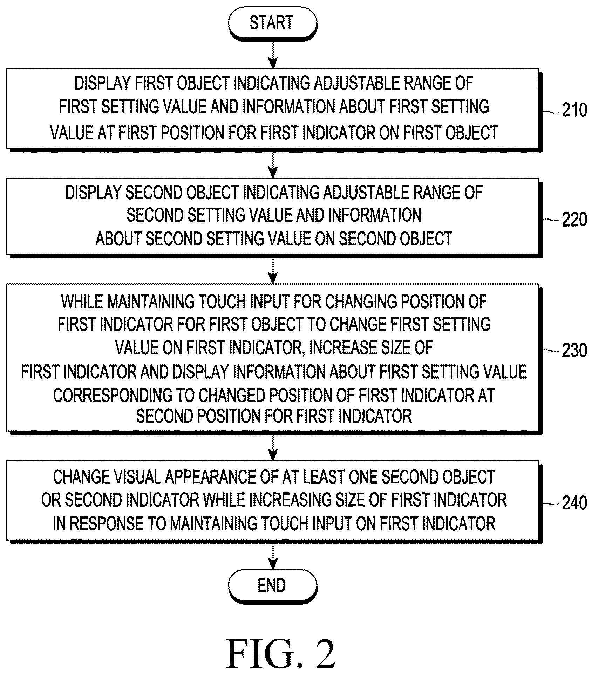

FIG. 2 is a flowchart illustrating an operation of changing and displaying an object and/or an indicator based on a touch input, of an electronic device according to an embodiment of the disclosure.

Referring to FIG. 2, in operation 210, an electronic device (e.g., an electronic device 101 of FIG. 1 or a processor 120 of FIG. 1) may display a first object indicating an adjustable range of a first setting value and a first indicator indicating a current first setting value on the first object.

According to an embodiment, in operation 220, the electronic device may display a second object indicating an adjustable range of the second setting value and a second indicator indicating a current second setting value on the second object. According to an embodiment, the second object may be disposed to be spaced apart from the first object by a set distance.

According to an embodiment, operations 210 and 220 may not be sequentially performed. According to an embodiment, operations 210 and 220 may be performed simultaneously. For example, the first object, the first indicator, the second object, and the second indicator may be performed simultaneously.

According to an embodiment, at least one of the first object or the second object may have a bar shape. For example, the first object and the second object may be referred to as a slider, a slider bar, a track bar, or a scroll bar.

According to an embodiment, at least one of the first object or the second object may be in the form of a straight bar, or the bar may be in the form of a loop surrounding a boundary of a specific figure (e.g., a circle, an ellipse, or a polygon).

According to an embodiment, the first object and the second object may indicate adjustable ranges for setting values for at least one of the pen thickness or pen transparency related to handwriting input.

According to an embodiment, the first object and the second object may indicate adjustable ranges for setting values for at least one of the volume or equalizer related to audio settings.

According to an embodiment, the first object and the second object may indicate adjustable ranges for setting values for at least one of the brightness, saturation, or contrast related to screen setting.

According to an embodiment, the interval between the first object and the second object may be set when the application is developed, or may be a value stored in memory (e.g., the memory 130 of FIG. 1), or may be set when the application is created or may be set by a user input.

According to an embodiment, the first indicator and the second indicator may be disposed at positions corresponding to the current setting values on the first object and the second object, respectively. According to an embodiment, the electronic device may display information (e.g., text or image) about the current setting value in each of the first indicator and the second indicator. For example, the indicator may be referred to as a knob, a handler, a handle, an indicator, a key, a button, an indication, a thumb, a scrubber, a component, an icon, a user interface (UI) element, a UI object, a visual element, or a visual component, but the expression method thereof is not limited thereto. According to an embodiment, the indicator may be a circle, an ellipse, a polygon, a text, an image, or an icon.

According to an embodiment, the electronic device may move on the first object or the second object, respectively, through a user input received through the first indicator or the second indicator. For example, the user input may include at least one of a touch (or drag) input by the user's finger or an electronic pen, a hovering input, an input by an external electronic device (e.g., a wireless controller or a controller connected to a virtual reality (VR)/augmented reality (AR) device), or a gesture input (e.g., a touch input through a gesture in a virtual space). According to an embodiment, the electronic device may adjust the corresponding setting value according to the position movement of the first indicator or the second indicator.

According to an embodiment, when a touch input (e.g., a touch input by a finger or an electronic pen) to an area other than the first indicator or the second indicator is received on the first object or the second object, the electronic device may move the first indicator or the second indicator to the position where the touch input is received. According to an embodiment, the electronic device may adjust the corresponding setting value based on the position to which the first indicator or the second indicator is moved. According to an embodiment, after moving the first indicator or the second indicator to the position where the touch input is received on the first object or the second object, when a drag input is performed while maintaining the touch input, the electronic device may move the first indicator or the second indicator based on the drag input and adjust a corresponding setting value. According to an embodiment, when the drag input is performed while the touch input is maintained, the drag input may be performed on the first object or the second object, or the drag input may be performed in an area outside the first object or the second object while the touch input is maintained. According to an embodiment, when a drag input is performed on the first object or the second object, or when a drag input is performed in an area outside the first object or the second object while maintaining the touch input, the electronic device may move the first indicator or the second indicator based on the drag input, and may adjust the setting value to correspond to the position of the first indicator or the second indicator.

According to an embodiment, the first object, the first indicator, the second object, and the second indicator may be displayed simultaneously, or the second object and the second indicator may be displayed based on a user input while the first object and the first indicator are displayed.

According to an embodiment, in operation 230, while the touch input for changing the position of the first indicator for the first object is maintained (or while the drag input is received while the touch input is maintained) to change the first setting value on the first indicator, the electronic device may increase the size of the first indicator, and may display information about the first setting value corresponding to the changed position of the first indicator at the second position for the first indicator.

According to an embodiment, the electronic device may change the display position of the information about the first setting value so that the information about the first setting value is not covered by the touch input. According to an embodiment, the electronic device may display information about the changed first setting value in the peripheral area of the position of the touch input. For example, when the size of the first indicator is increased based on the touch input, the electronic device may display information about the changed first setting value outside the edge (e.g., the upper end) of the enlarged first indicator or the enlarged first indicator.

According to an embodiment, only the display position of the information about the first setting value may be changed without increasing the size of the first indicator based on the touch input. For example, the electronic device may display the information about the first setting value in the peripheral area of the touch input area so that the information about the first setting value is not hidden by the touch input. According to an embodiment, when the drag is received while the touch input is maintained, the display position of the first setting value changed based on the drag input may also be changed to a peripheral area of the drag input position.

According to an embodiment, the electronic device may determine the size to which the first indicator is to be increased, based on the size of the area of the touch input on the touch screen. According to an embodiment, the electronic device may determine the size to which the first indicator is to be increased based on the area in which the first indicator is hidden by the touch input.

According to an embodiment, the electronic device may determine the size to which the first indicator is to be increased based on the size of the area of the largest touch input detected within a set time after the touch input is started. According to an embodiment, the electronic device may determine the size to which the first indicator is to be increased based on the area in which the largest first indicator detected within a set time after the touch input is started is hidden. According to an embodiment, the electronic device may determine the size to which the first indicator is to be increased, based on the means of the touch input.

According to an embodiment, when the first indicator is hidden by the finger or the electronic pen that performs the touch input, the electronic device may increase the size of the first indicator to expose the first indicator. For example, the electronic device may increase the left and right size (e.g., width or diameter) and/or the upper and lower size (e.g., length) of the first indicator.

According to an embodiment, when the first indicator is not covered as the touch input is performed by hovering or gesture, the electronic device may maintain the size of the first indicator.

According to an embodiment, the electronic device may increase the size of the first indicator to the determined size. For example, when the first indicator is extended upward, the electronic device may extend the first indicator to the determined height. For example, in the case of a touch input by an electronic pen having a small touch area, the electronic device may not increase the size of the first indicator or may increase only the height by a first ratio (e.g., about 1.5 times) without adjusting the width. For example, in the case of a touch input by a finger having a large touch area, the electronic device may increase the width of the first indicator by the touch area, and increase the height by a second ratio (e.g., about twice) higher than the first ratio. According to an embodiment, the maximum size to which the first indicator may be extended may be set during manufacturing, and the electronic device may determine the extension size of the first indicator according to the touch area within the maximum size.

According to an embodiment, the electronic device may display information related to the current setting value in at least one of the inside or surroundings of the extended first indicator. For example, when the first indicator is extended upward based on a touch input, information related to the current setting value may be displayed in at least one of the inside or surroundings of the extended area.

According to an embodiment, the electronic device may further display one or more setting values related to the setting value corresponding to the first indicator as well as information about the setting value corresponding to the first indicator in at least one of the inside or surroundings of the enlarged first indicator. For example, the electronic device may further display not only information about the pen thickness but also information about at least one of the pen color, transparency, and pen type related to the pen thickness as the setting value corresponding to the extended first indicator.

According to an embodiment, the electronic device may increase the size of the first indicator positioned in the area where the touch input is received, based on reception of the touch input to the first indicator or the first object. For example, the electronic device may increase the size of the first indicator based on reception of a touch input in the area in which the first indicator is displayed. According to an embodiment, the electronic device may move the position of the first indicator to the area where the touch input is received and may increase the size of the first indicator whose position is moved to the touch input area, based on the touch input being received in the area other than the area where the first indicator is displayed of the first object.

According to an embodiment, the electronic device may increase the size of the first indicator when a pressure input of a specific value or more is detected to at least one of the first indicator or the first object, or when the touch input is maintained (e.g., long press) for a set time or more.

According to an embodiment, the electronic device may increase the size of the first indicator based on reception of a drag input for moving the position of the touch input while the touch input to the first indicator is maintained. For example, when the electronic device moves the touch input while maintaining the touch input without increasing the size of the first indicator positioned in the touch input area while the touch input does not move, the electronic device may increase the size of the first indicator and may move the position of the first indicator whose size is increased based on the movement of the touch input.

According to an embodiment, when the movement of the position of the touch input is stopped while the touch input to the first indicator is maintained, the electronic device may increase the size of the first indicator. For example, the electronic device may not increase the size of the first indicator positioned in the touch input area while moving the touch input after the touch input, and may increase the size of the first indicator when the movement of the touch input stops for a set time or more.

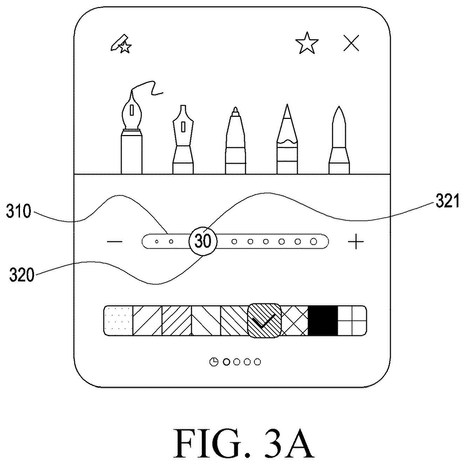

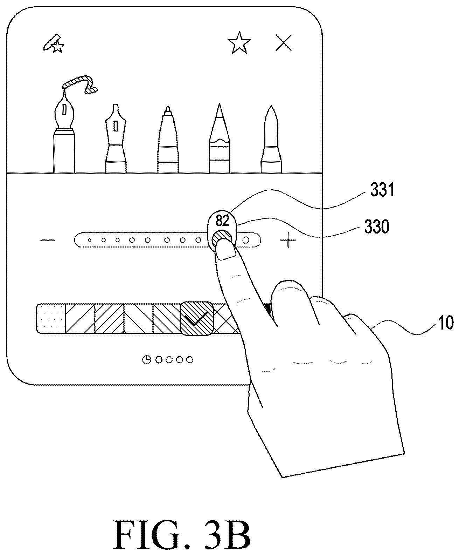

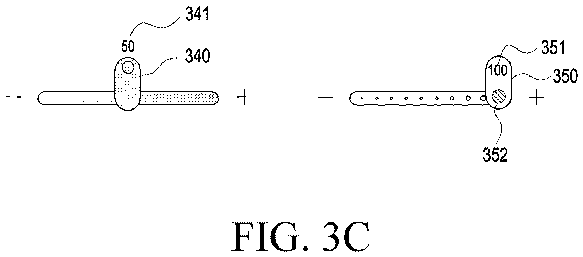

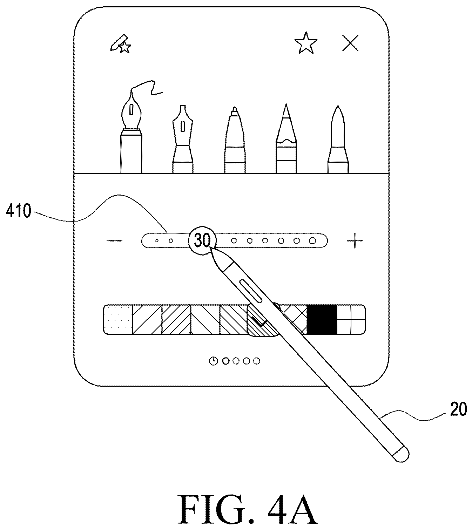

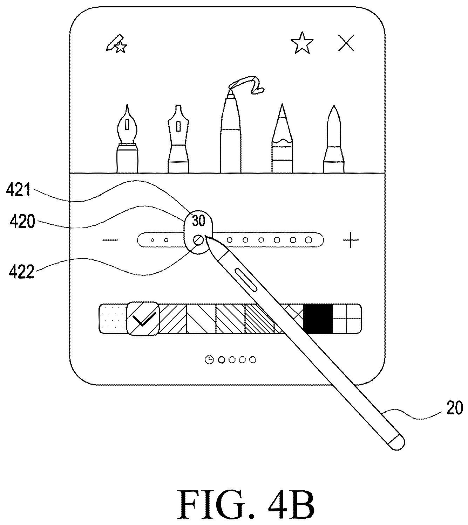

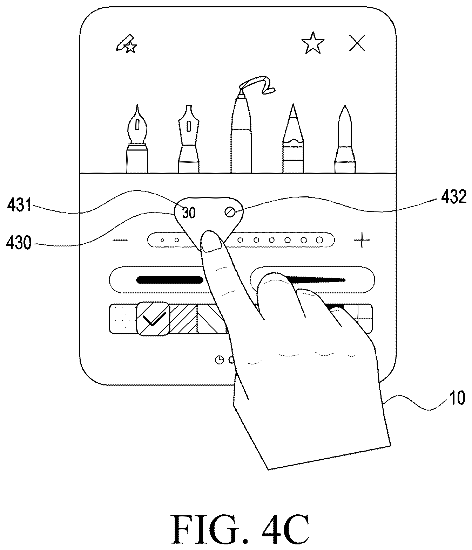

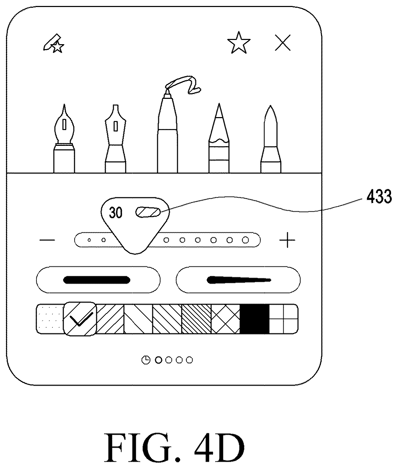

According to an embodiment, an embodiment in which the size of the indicator hidden by the touch input is increased is described in more detail with reference to FIGS. 3A, 3B, 3C, 4A, 4B, 4C, and 4D.

According to an embodiment, the electronic device may determine the position to which the first setting value is to be moved or the direction in which the size of the first indicator is to be increased based on at least one of the position of the touch of a portion of the palm around the touch input area or the position of the peripheral object of the touched object when performing a touch input with a hand or an electronic pen, the direction of the electronic pen, or the direction of the hand (e.g., the finger performing the touch input) related to the touch input and may perform at least one of the operation of increasing the size of the first indicator in the determined direction or the operation of moving the display position of the first setting value. For example, when the electronic pen or the finger is inclined in the first direction with respect to the touch input position, the electronic device may perform at least one of the operation of increasing the size of the first indicator or the operation of moving the display position of the first setting value in a direction opposite to the first direction.

According to an embodiment, when the electronic pen or the finger is inclined downward with respect to the touch input position, the electronic device may perform at least one of the operation of increasing the size of the first indicator upward or the operation of moving the display position of the first setting value. According to an embodiment, when the electronic pen or the finger is inclined upward with respect to the touch input position, the electronic device may perform at least one of the operation of increasing the size of the first indicator downward or the operation of moving the display position of the first setting value. According to an embodiment, when the electronic pen or the finger is inclined in the right direction with respect to the touch input position, the electronic device may perform at least one of the operation of increasing the size of the first indicator in the left direction or the operation of moving the display position of the first setting value. According to an embodiment, when the electronic pen or the finger is inclined in the left direction with respect to the touch input position, the electronic device may perform at least one of the operation of increasing the size of the first indicator in the right direction or the operation of moving the display position of the first setting value.

According to an embodiment, the electronic device may determine at least one of the direction in which the size of the first indicator is increased or the movement direction of the display position of the first setting value, based on the position of the touch input area in which the pen or the finger is touched and the position of the area in which the portion of the palm is touched around the touch input area. For example, the electronic device may perform at least one of the operation of increasing the size of the first indicator or the operation of moving the display position of the first setting value in a direction other than the direction in which the area in which a portion of the palm is touched is disposed with respect to the touch input area. According to an embodiment, the electronic device may determine at least one of the direction in which the size of the first indicator is increased or the movement direction of the display position of the first setting value in a direction other than the direction in which the surrounding object is disposed with respect to the touched object.

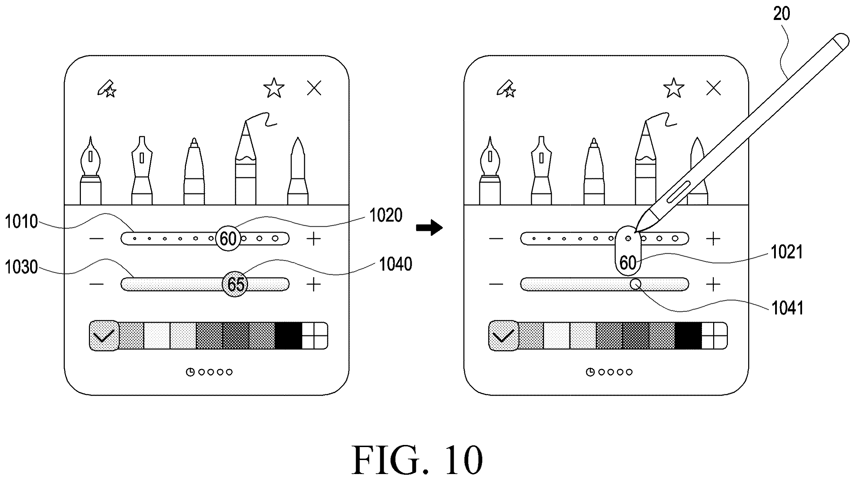

According to an embodiment, an embodiment in which the direction in which the size of the first indicator is to be increased is changed based on the direction of the hand or the electronic pen related to the touch input is described in more detail with reference to FIG. 10.

According to an embodiment, when the touch input is released, the electronic device may reduce the size of the first indicator to the original size. For example, according to an embodiment, when the touch input is maintained in state in which the size of the first indicator is increased, the electronic device may maintain the increased size of the first indicator. According to an embodiment, even when the touch input is maintained in the state in which the size of the first indicator is increased, when the touch input moves out of the set area (e.g., the area in which the first object is displayed), the increased size of the first indicator may be reduced to the original size.

According to an embodiment, in operation 240, in response to the touch input being maintained on the first indicator, the visual appearance (e.g., at least one of size, position, color, or transparency) of at least one of the second object or the second indicator may be changed while the size of the first indicator is increased.

According to an embodiment, when the size of the first indicator does not increase based on the touch input being maintained on the first indicator (e.g., when the first indicator is not covered by the electronic pen input or the hovering input), the electronic device may move only the display position of the first setting value corresponding to the position of the first indicator.

According to an embodiment, the electronic device may change at least one of the second object or the second indicator based on the increase in the size of the first indicator. For example, when the increased size of the first indicator is maintained as the touch input is maintained after the size of the first indicator is increased, the electronic device may change at least one of the size, position, color, or transparency of at least one of the second object or the second indicator.

According to an embodiment, when the size of the first indicator increases so that the first indicator overlaps the second indicator, the electronic device may change at least one of the size, position, color, or transparency of at least one of the second object or the second indicator.

According to an embodiment, when the enlarged first indicator and the second indicator do not overlap each other, the electronic device may not change the size, position, color, and transparency of the second object and the second indicator.

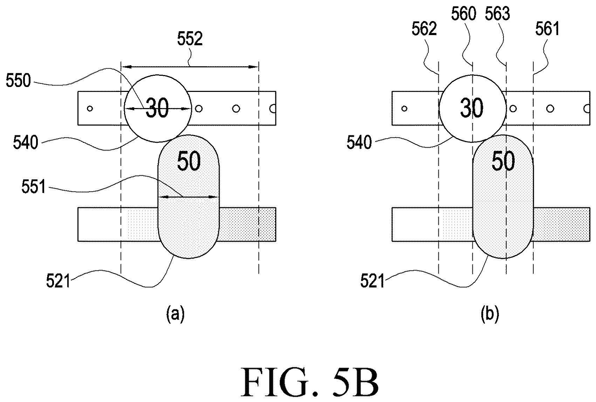

According to an embodiment, an embodiment in which the second indicator overlaps as the size of the first indicator increases is described below with reference to FIG. 5B.

According to an embodiment, if the first indicator is enlarged and is thus likely to overlap the second indicator, the electronic device may change at least one of the second object or the second indicator. For example, when the first indicator is likely to overlap the second indicator, it may mean that the enlarged first indicator and the second indicator do not currently overlap each other, but the movable areas of the enlarged first indicator and the second indicator overlap so that the enlarged first indicator and/or the second indicator may be rendered to overlap by its movement.

According to an embodiment, the electronic device may change at least one of the size, position, color, or transparency of at least one of the second object or the second indicator even though the enlarged first indicator and the second indicator do not overlap each other.

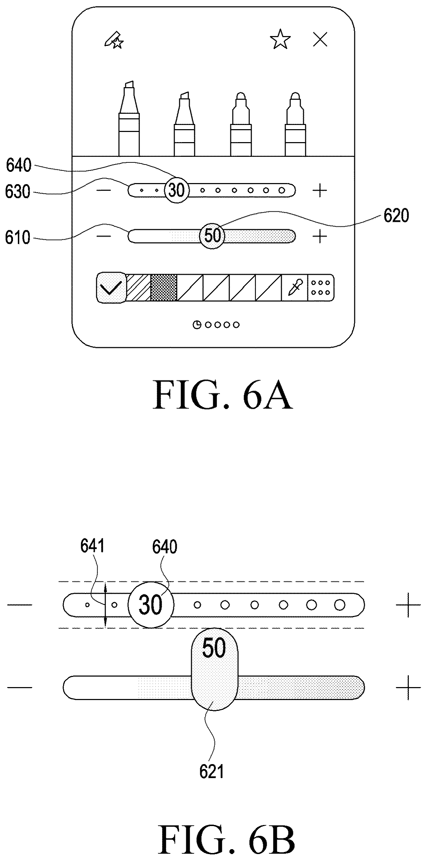

According to an embodiment, an embodiment in which the second indicator may overlap as the size of the first indicator increases is described below with reference to FIG. 6B.

According to an embodiment, the electronic device may reduce the size of the second indicator based on the increase in the size of the first indicator. According to an embodiment, based on the decrease in the size of the second indicator, the first setting value corresponding to the position of the first indicator may not be displayed.

According to an embodiment, based on the increase in the size of the first indicator, the electronic device may maintain the display of the second object and delete (e.g., not display on the screen) the second indicator. According to an embodiment, the electronic device may display information (e.g., text and/or image) about the setting value for the second indicator around the shrunken second indicator or around the area where the second indicator is deleted.

According to an embodiment, when the touch input is released, the electronic device may reduce the enlarged first indicator to the original size, may increase the shrunken second indicator to the original size, or may re-display the second indicator deleted from the second object.

According to an embodiment, based on the release of the touch input, the electronic device may re-display information (e.g., text and/or image) about the setting value for the second indicator in the second indicator increased to the original size.

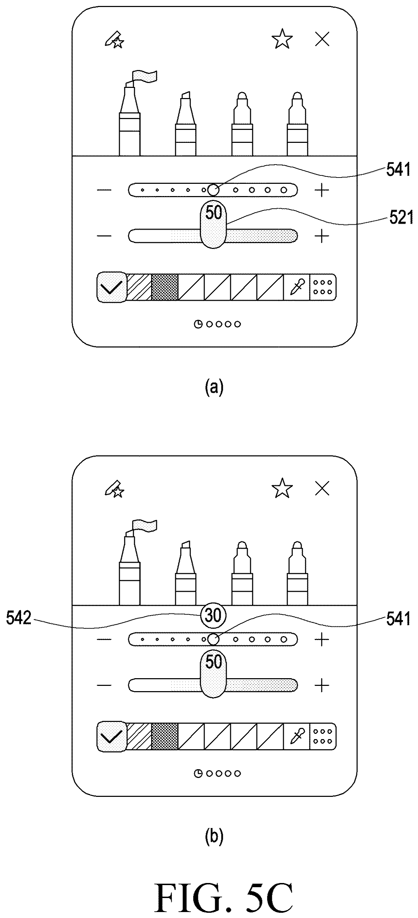

According to an embodiment, an embodiment in which the size of the second indicator is reduced or the second indicator is deleted is described in more detail with reference to FIG. 5C, 5D, 6C, or 8.

According to an embodiment, the electronic device may move the positions of the second object and the second indicator based on the increase in the size of the first indicator. For example, the electronic device may move the positions of the first object, the second object disposed on the first indicator, and the second indicator upward based on the size of the first indicator increasing upward.

According to an embodiment, based on the touch input being released, the electronic device may reduce the enlarged first indicator to the original size, and may move the positions of the repositioned second object and second indicator to the original positions.

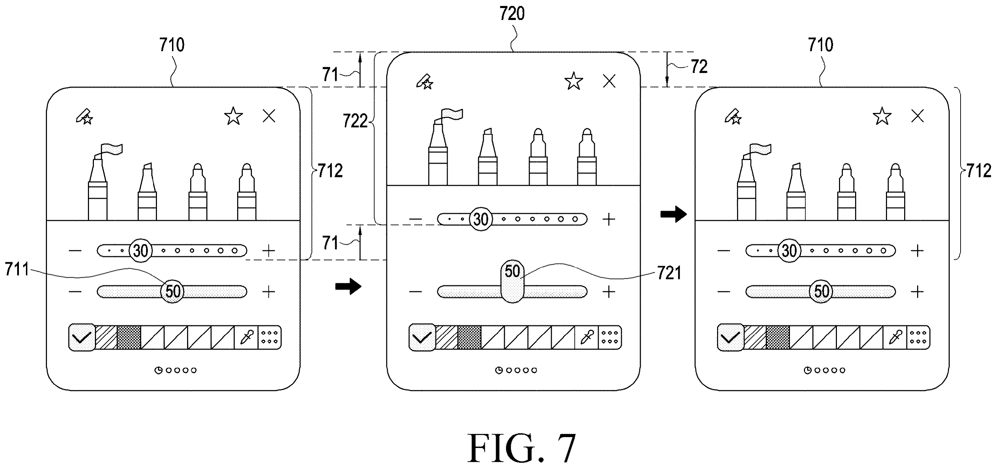

According to an embodiment, the operation of moving the positions of the second object and the second indicator based on the increase in the size of the first indicator is described below in more detail with reference to FIG. 7.

According to an embodiment, the electronic device may increase the transparency of the second object and the second indicator based on the increase in the size of the first indicator. For example, the electronic device may not display the second object and the second indicator on the screen based on the increase in the size of the first indicator.

According to an embodiment, based on the touch input being released, the electronic device may reduce the enlarged first indicator to the original size, and may reduce the transparency of the second object and the second indicator having the increased transparency to the original transparency.

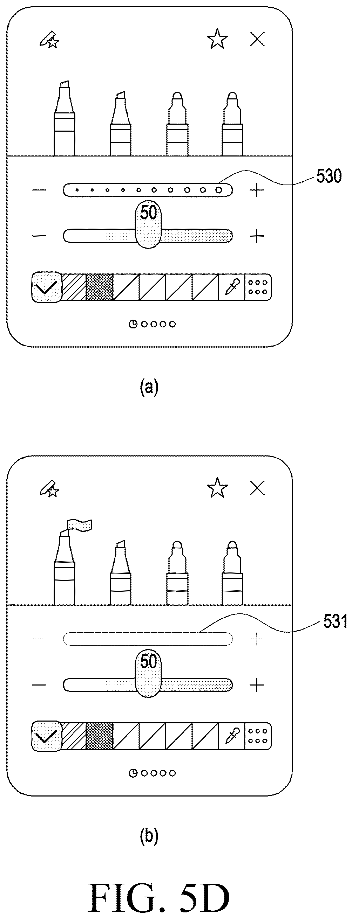

According to an embodiment, the operation of increasing the transparency of the second object and the second indicator based on the increase in the size of the first indicator is described in more detail with reference to FIG. 5D.

According to an embodiment, the electronic device may change at least one of the size, position, or transparency of at least one of the second object or the second indicator at the time when the first indicator is increased, based on the touch input.

According to an embodiment, through the movement of the touch input, the electronic device may change at least one of the size, position, or transparency of at least one of the second object or the second indicator at the time when the movement of the enlarged first indicator starts.

According to an embodiment, the electronic device may change at least one of the size, position, or transparency of at least one of the second object or the second indicator when at least a portion of the enlarged first indicator and at least a portion of the second indicator overlap each other based on the touch input or the movement of the touch input (or when the overlap is maintained for a set time or longer). According to an embodiment, when the second indicator overlapping at least a portion of the enlarged first indicator does not overlap based on the movement of the touch input, the electronic device may restore the second object or the second indicator to the original size, the original position, and the original transparency.

According to an embodiment, the electronic device may reduce the size of the enlarged first indicator to the original size based on receiving a drag input of moving the position of the touch input outside the first object and the first indicator in state in which the touch input is maintained after the size of the first indicator is increased. According to an embodiment, the electronic device may move the first indicator reduced to the original size based on the drag input received through the peripheral area of the first object. According to an embodiment, the electronic device may maintain the size of the enlarged first indicator based on receiving a drag input of moving the position of the touch input outside the first object and the first indicator in state in which the touch input is maintained after the size of the first indicator is increased.

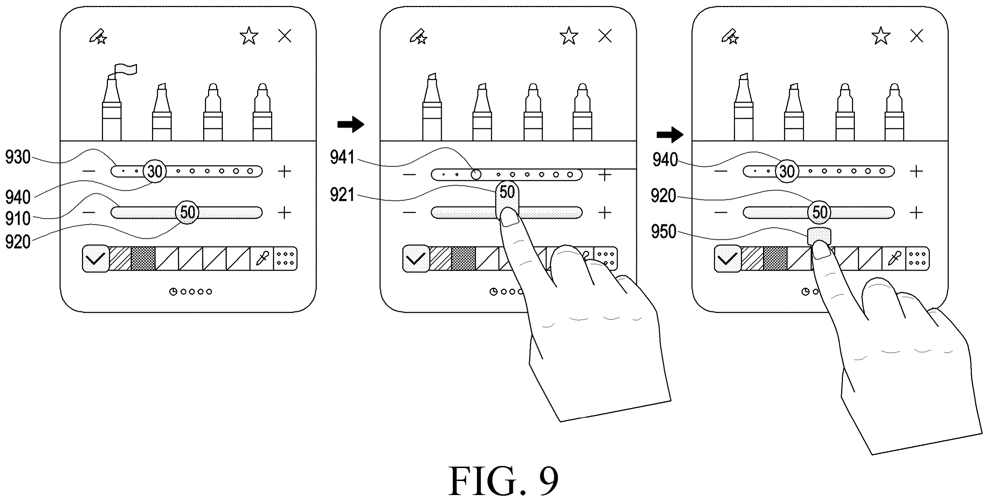

According to an embodiment, an embodiment of decreasing the size of the first indicator based on receiving a drag input of moving the position of the touch input outside the first object and the first indicator in state in which the touch input is maintained after the size of the first indicator is increased is described below in more detail with reference to FIG. 9.

As described above, as the electronic device adjusts the setting value through a touch (and drag) input of a finger or an electronic pen, the electronic device may extend the hidden indicator and display the setting value at a different position, thereby providing them to the user.

FIG. 3A is a view illustrating an object and an indicator for adjusting a setting value, of an electronic device according to an embodiment of the disclosure.

Referring to FIG. 3A, an electronic device (e.g., an electronic device 101 of FIG. 1 or a processor 120 of FIG. 1) may display a screen for adjusting a setting value. For example, the screen related to the setting value may include an object 310 indicating an adjustable range of the setting value and an indicator 320 positioned in an area corresponding to the current setting value on the object 310. According to an embodiment, the indicator 320 may include information 321 (e.g., text and/or image) about the current setting value.

For example, the screen related to the setting value may be a screen related to handwriting setting. For example, the object 310 may be related to a setting range for a pen thickness, and the indicator 320 may be related to a current pen thickness setting value (e.g., 30).

According to an embodiment, the screen related to the handwriting setting may further include at least one object for setting at least one of the pen type, the pen color, or pen transparency.

According to an embodiment, the electronic device may increase the size of the indicator as illustrated in FIG. 3B, based on receiving a touch (and/or drag) input for manipulating the indicator 320 to adjust the setting value.

FIG. 3B is a view illustrating an indicator changed according to a touch input, of an electronic device according to an embodiment of the disclosure.

FIG. 3C is a view illustrating an indicator changed according to a touch input, of an electronic device according to an embodiment of the disclosure.

Referring to FIG. 3B, based on maintaining the touch input to the object 310 of FIG. 3A or the indicator 320 of FIG. 3A, the electronic device may display an enlarged indicator 330 in the area where the touch input is received. For example, the enlarged indicator 330 may be one extended upward with respect to the touch area.

According to an embodiment, when the indicator 320 of FIG. 3A is touched, the electronic device may display an enlarged indicator 330. According to an embodiment, when the touch input is dragged to the area corresponding to a desired setting value while being maintained, the electronic device may move the position of the enlarged indicator 330 to the area corresponding to the desired setting value. According to an embodiment, the enlarged indicator 330 may include a changed setting value 331 (e.g., 82).

According to an embodiment, when the indicator 320 of FIG. 3A is touched, and then the touch input starts to be dragged to the area corresponding to the desired setting value while being maintained, the electronic device may display an enlarged indicator 330. According to an embodiment, the electronic device may move the position of the enlarged indicator 330 to the area corresponding to the desired setting value based on the drag input. According to an embodiment, the enlarged indicator 330 may include a changed setting value 331 (e.g., 82).

According to an embodiment, the electronic device may display an enlarged indicator 330 when the position of the touch input is not moved for a set time after the touch input to the indicator 320 of FIG. 3A is dragged to the area corresponding to the desired setting value while being maintained. According to an embodiment, the electronic device may display an enlarged indicator 330 in the area corresponding to the setting value after moving the position of the indicator (e.g., the indicator 320 of FIG. 3A) having the original size to the area corresponding to the desired setting value based on the drag input. According to an embodiment, the enlarged indicator 330 may include a changed setting value 331 (e.g., 82).

According to an embodiment, the electronic device may move the object 310 of FIG. 3A to the touch input area and display the enlarged indicator 330 in the touch input area, based on touching the area corresponding to the desired setting value of the object 310 of FIG. 3A. According to an embodiment, the enlarged indicator 330 may include a changed setting value 331 (e.g., 82).

According to an embodiment, the electronic device may determine at least one of the degree of extension of the indicator or the movement position of the setting value 331 based on the size of the area in which the indicator 330 is hidden by the touch input or the touch area.

According to an embodiment, the electronic device may determine at least one of the movement position of the setting value 331 or the degree of extension of the indicator 330 based on the upper position of the touch input.

According to an embodiment, referring to FIG. 3C, the electronic device may display the current setting value 341 (e.g., pen thickness or transparency) around the enlarged indicator 340.

According to an embodiment, the electronic device may further display another setting value 352 related to the current setting value as well as the current setting value 351 in the enlarged indicator 350. For example, when the electronic device adjusts the setting value related to the pen thickness, the electronic device may further display information about the current pen thickness setting value 351 (e.g., 100) and the color setting value 352 (e.g., blue) related to pen thickness, in the enlarged indicator 350.

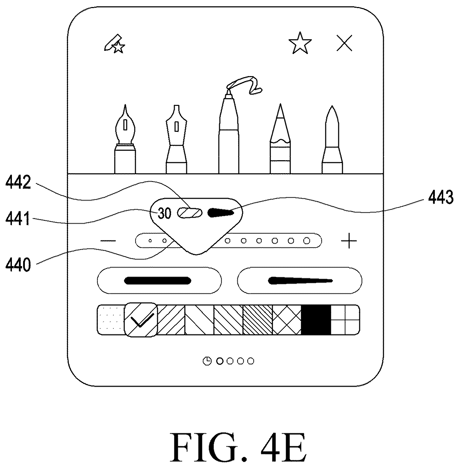

According to an embodiment, the electronic device may vary the arrangement of pieces of information displayed in the enlarged indicator as shown in FIG. 4C, and may vary the type and number of pieces of information displayed in the enlarged indicator as shown in FIGS. 4D and 4E.

FIG. 4A is a view illustrating an operation of displaying an indicator according to a touch input through an electronic pen, of an electronic device according to an embodiment of the disclosure.

FIG. 4B is a view illustrating an operation of displaying an indicator according to a touch input through an electronic pen, of an electronic device according to an embodiment of the disclosure.

FIG. 4C is a view illustrating an operation of displaying an indicator according to a touch input through a finger, of an electronic device according to an embodiment of the disclosure.

FIG. 4D is a view illustrating an indicator enlarged by a touch input, of an electronic device according to an embodiment of the disclosure.

FIG. 4E is a view illustrating an indicator enlarged by a touch input, of an electronic device according to an embodiment of the disclosure.

Referring to FIG. 4A, an electronic device (e.g., the electronic device 101 of FIG. 1 or the processor 120 of FIG. 1) may maintain the size of the indicator 410 when performing a touch input through an electronic pen 20 (e.g., the electronic device 104 of FIG. 1). For example, when the touch area is less than a set value, the electronic device may maintain the size of the indicator 410.

As such, when the indicator and/or the information about the setting value related to the indicator is not hidden by the touch input as the touch area is less than the set value, the electronic device may maintain the size of the indicator.

According to an embodiment, referring to FIG. 4B, when the electronic device performs a touch input through the electronic pen 20, the electronic device may display an enlarged indicator 420. For example, the electronic device may display the indicator 420, whose size has been increased upward, in the area in which the touch input is performed through the electronic pen 20.

According to an embodiment, even when a touch input is performed using a finger, the electronic device may display the enlarged indicator in the area in which the touch input is performed.

According to an embodiment, the electronic device may display the current setting value 421 corresponding to the indicator 420 in the extended area of the enlarged indicator 420. For example, the electronic device may display the current setting value 421 (e.g., 30) related to pen thickness in the extended area of the enlarged indicator 420.

According to an embodiment, the electronic device may further display a related setting value 422 (e.g., a color) as well as the current setting value 421 corresponding to the indicator 420, in the enlarged indicator 420.

According to an embodiment, referring to FIG. 4C, when the electronic device performs a touch input through the user's finger 10 or an electronic pen, the electronic device may display an enlarged indicator 430. For example, the enlarged indicator 430 may be one that has increased in length and width.

According to an embodiment, the enlarged indicator 430 may be one in which the current setting value 431 (e.g., pen thickness) related to the indicator 430 and the related setting value 432 (e.g., pen color) are displayed side by side in the extended area.

According to an embodiment, referring to FIG. 4D, the electronic device may display, side by side, the current setting value (e.g., pen thickness) related to the indicator and the related setting value 433 (e.g., pen type) in the extended area of the indicator that has increased in length and width. According to an embodiment, the related setting value 433 may be changed according to the use history or use setting. For example, the latest manipulated setting value before the current setting value (e.g., pen thickness) related to the indicator is manipulated may be displayed as the related setting value 433, or the setting value most frequently used by the user may be displayed as the related setting value 433.

According to an embodiment, referring to FIG. 4E, the electronic device may display, side by side, the current setting value 441 (e.g., pen thickness) related to the indicator and a plurality of related setting values 442 and 443 (e.g., pen type, pen color, or pen texture) in the extended area of the indicator 440 that has increased in length and width.

According to an embodiment, the electronic device may determine at least one of the degree of extension of the indicator or the movement position of the setting value based on the size of the area in which the indicator is hidden by the touch input or the touch area.

For example, when the touch area is less than a set first value or the area of the portion in which the indicator is hidden by the touch input is less than the set first value, the electronic device may maintain the size of the indicator as shown in FIG. 4A. According to an embodiment, when the touch area is less than a set first value or the area of the portion in which the indicator is hidden by the touch input is less than the set first value, the electronic device may maintain the size of the indicator and move the display position of the setting value to a peripheral area (e.g., an upper end of the indicator) of the touch input area.

According to an embodiment, when the touch area is not less than the set first value and less than a second value or the area of the portion in which the indicator is hidden by the touch input is not less than the set first value and is less than the second value (e.g., 1/4 of the indicator), the electronic device may increase the size of the indicator upward as shown in FIG. 4B. For example, when the touch area is not less than the set second value and less than a third value or the area of the portion in which the indicator is hidden by the touch input is not less than the set second value and is less than the third value, the electronic device may increase the size of the indicator upward and may also increase the width as shown in FIG. 4C or 4D. For example, when the touch area is not less than the set third value and less than a fourth value or the area of the portion in which the indicator is hidden by the touch input is not less than the set third value and is less than the fourth value, the electronic device may increase the size of the indicator upward and may further increase the width as shown in FIG. 4E.

According to an embodiment, the electronic device may determine at least one of the movement position of the setting value or the degree of extension of the indicator based on the upper position of the touch input. For example, when the position of an upper end of the touch input is included in a first area at a lower end of the indicator, the electronic device may maintain the size of the indicator. According to an embodiment, when the position of the upper end of the touch input is included in a second area in the middle of the indicator, the electronic device may increase the size of the indicator upward. According to an embodiment, when the position of the upper end of the touch input is included in a third area at an upper end of the indicator, the electronic device may increase the size of the indicator and may also increase the width.

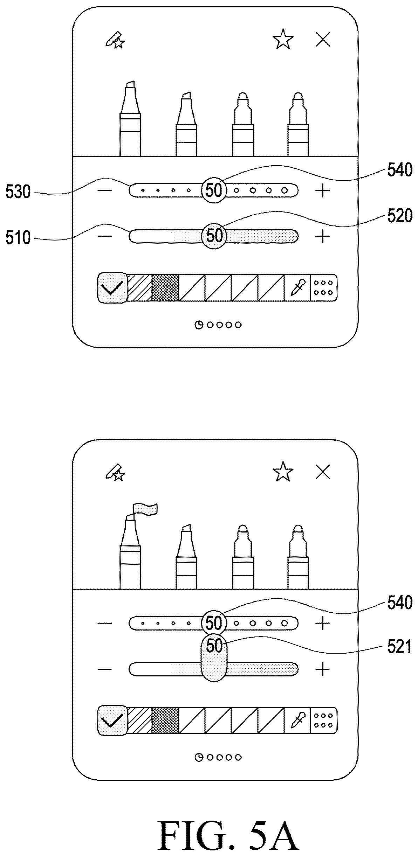

FIG. 5A is a view illustrating a case where an overlap with an adjacent indicator occurs based on enlargement of an indicator, of an electronic device according to an embodiment of the disclosure.

Referring to FIG. 5A, an electronic device (e.g., an electronic device 101 of FIG. 1 or a processor 120 of FIG. 1) may display a first object 510 indicating an adjustable range of a first setting value and a first indicator indicating a current first setting value on the first object 510. According to an embodiment, the electronic device may display a second object 530 indicating an adjustable range of the second setting value and a second indicator 540 indicating a current second setting value on the second object 530, in an area spaced apart from the first object 510 by a set distance. For example, the second object 530 may be disposed adjacent to the first object 510 and may be positioned above the first object 510.

According to an embodiment, the electronic device may display an enlarged first indicator 521 based on a user input to the first object 510 or the first indicator 520. Thus, at least a portion of the enlarged first indicator 521 and at least a portion of the second indicator 540 may be likely to overlap each other.

According to an embodiment, an operation for an electronic device to determine the likelihood that at least a portion of the enlarged first indicator 521 and at least a portion of the second indicator 540 overlap each other is described with reference to FIG. 5B.

According to an embodiment, a screen in which at least a portion of the first indicator 521 and at least a portion of the second indicator 540 overlap each other as shown in FIG. 5A is merely for describing the likelihood of overlapping, and may not be a screen displayed through the display (e.g., the display module 160 of FIG. 1) of the electronic device.

FIG. 5B is a view illustrating an operation of determining whether an enlarged indicator and an adjacent indicator overlap, of an electronic device according to an embodiment of the disclosure.

Referring to part (a) of FIG. 5B, when the second indicator 540 is positioned within the area 552 set with respect to the enlarged first indicator 521, the electronic device may identify that the first indicator 521 and the second indicators 540 overlap each other. For example, the electronic device may identify the area 552 set based on the width 551 of the first indicator 521 and the width 550 of the second indicator 540. For example, the length of the set area 552 may be the sum of the width 551 of the enlarged first indicator 521 and the width 550 of the second indicator 540, but is not limited thereto.

Referring to part (b) of FIG. 5B, the electronic device may identify that the enlarged first indicator 521 and the second indicator 540 overlap each other based on the left and right boundary coordinates 560 and 561 (e.g., x coordinate and/or y coordinate) of the enlarged first indicator 521 and the left and right boundary coordinates 562 and 563 (e.g., x coordinate and/or y coordinate) of the second indicator 540. For example, the electronic device may obtain x coordinates 560, 561, 562, and 563 of the left and right boundaries of each indicator when the enlarged first indicator 521 and the second indicator 540 contact each other and, when the difference between two of the x coordinates 560, 561, 562, and 563 of the left and right boundaries of each indicator is within a set range, identify that the enlarged first indicator 521 and the second indicator 540 overlap each other.

According to an embodiment, the size of the enlarged first indicator 521 may be determined by the touch area, and the possible maximum size (e.g., diameter and/or length) may be preset. For example, the possible maximum size of the enlarged first indicator 521 may be a size in which the enlarged first indicator 521 does not overlap the second object 530, based on the interval between the first object 510 and the second object 530.

According to an embodiment, when the size of the enlarged first indicator 521 is determined based on the touch area, the electronic device may change the size of the enlarged first indicator 521 in real time based on the change in the touch area.

According to an embodiment, when the size of the enlarged first indicator 521 is determined based on the touch area, the electronic device may determine the size of the enlarged first indicator 521 based on the maximum touch area detected for a set time after the touch input starts and, even when the touch area is changed after the enlarged first indicator 521 is displayed, may maintain the size of the enlarged first indicator 521.

FIG. 5C is a view illustrating an operation of changing an adjacent indicator based on enlargement of an indicator, of an electronic device according to an embodiment of the disclosure.

FIG. 5D is a view illustrating an operation of changing an adjacent indicator and an adjacent object based on enlargement of an indicator, of an electronic device according to an embodiment of the disclosure.

According to an embodiment, referring to part (a) of FIG. 5C, when the enlarged first indicator 521 and the second indicator overlap each other, the electronic device may display a shrunken second indicator 541 on the second object.

According to an embodiment, referring to part (b) of FIG. 5C, the electronic device may further display information 542 about the current second setting value corresponding to the shrunken second indicator 541 around (e.g., above) the shrunken second indicator 541.

According to an embodiment, referring to part (a) of FIG. 5D, when the enlarged first indicator and the second indicator overlap each other, the electronic device may delete the second indicator displayed on the second object 530.

According to an embodiment, referring to part (b) of FIG. 5D, when the enlarged first indicator and the second indicator overlap each other, the electronic device may display the transparency-increased second object 531. According to an embodiment, the shrunken second indicator may be displayed transparency-increased, on the transparency-increased second object 531, or the second indicator may be deleted.

According to an embodiment, when the enlarged first indicator 521 and the original second indicator 540 do not overlap each other according to the position movement of the enlarged first indicator 521, the electronic device may restore the resized or transparency-changed second indicator.

According to an embodiment, when the touch input is released, the electronic device may restore the resized or transparency-changed second indicator.

FIG. 6A is a view illustrating a case where an overlap with an adjacent indicator does not occur based on enlargement of an indicator, of an electronic device according to an embodiment of the disclosure.

FIG. 6B is a view illustrating a case where an enlarged indicator and a movable area of an adjacent indicator overlap, of an electronic device according to an embodiment of the disclosure.

Referring to FIG. 6A, an electronic device (e.g., the electronic device 101 of FIG. 1 or the processor 120 of FIG. 1) may display a first object 620 indicating an adjustable range of a first setting value and a first indicator indicating a current first setting value on the first object 610. According to an embodiment, the electronic device may display a second object 630 indicating an adjustable range of the second setting value and a second indicator 640 indicating a current second setting value on the second object 630, in an area spaced apart from the first object 610 by a set distance. For example, the second object 630 may be disposed adjacent to the first object 610 and may be positioned above the first object 610.

According to an embodiment, referring to FIG. 6B, the electronic device may display an enlarged first indicator 621 based on a user input to the first object 610 or the first indicator 620. Accordingly, at least a portion of the enlarged first indicator 621 does not overlap at least a portion of the second indicator 640, but may overlap the movable area of the second indicator 640.

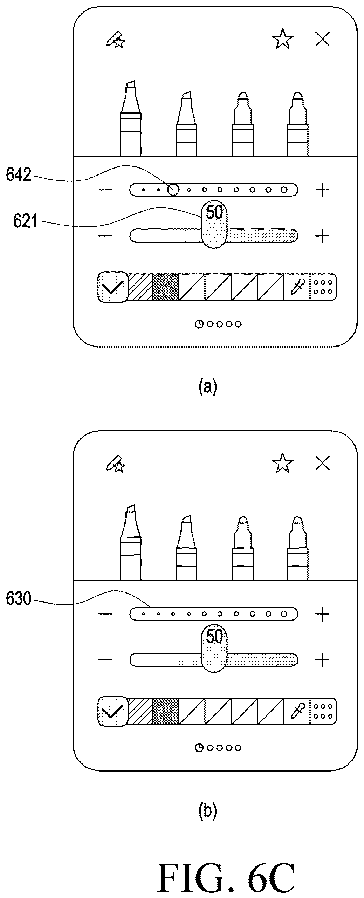

According to an embodiment, when at least a portion of the enlarged first indicator 621 overlaps at least a portion of the movable area 641 of the second indicator 640, the electronic device may change the second indicator 640 as shown in FIG. 6C. For example, the electronic device may identify whether at least a portion of the enlarged first indicator 621 overlaps at least a portion of the movable area 641 of the second indicator 640 based on the distance between the first object 610 and the second object 630, the length of the enlarged first indicator 621, and the diameter of the second indicator 640.

According to an embodiment, a screen in which at least a portion of the first indicator 621 and at least a portion of the second indicator 640 overlap each other as shown in FIG. 6B is merely for describing the likelihood of overlapping, and may not be a screen displayed through the display (e.g., the display module 160 of FIG. 1) of the electronic device.

FIG. 6C is a view illustrating an operation of changing an adjacent indicator based on enlargement of an indicator, of an electronic device according to an embodiment of the disclosure.

Referring to part (a) of FIG. 6C, when the enlarged first indicator 621 and the movable area of the second indicator overlap each other, the electronic device may display a shrunken second indicator 642 on the second object.

According to an embodiment, the electronic device may further display information about the current second setting value corresponding to the shrunken second indicator 642 around (e.g., above) the shrunken second indicator 642.

According to an embodiment, referring to part (b) of FIG. 6C, when the enlarged first indicator 621 and the movable area of the second indicator overlap each other, the electronic device may delete the second indicator displayed on the second object 630.

According to an embodiment, when the enlarged first indicator 621 and the movable area of the second indicator overlap each other, the electronic device may display a transparency-increased second object. According to an embodiment, the shrunken second indicator may be displayed transparency-increased, on the transparency-increased second object, or the second indicator may be deleted.

According to an embodiment, when the touch input is released, the electronic device may restore the resized or transparency-changed second indicator.

FIG. 7 is a view illustrating an operation of changing positions of an adjacent object and an adjacent indicator based on enlargement of an indicator, of an electronic device according to an embodiment of the disclosure.

Referring to FIG. 7, the electronic device (e.g., an electronic device 101 of FIG. 1 or a processor 120 of FIG. 1) may display a first screen 710 (e.g., a pop-up screen) for changing the setting value. For example, when the first screen 710 for changing the setting value is a screen for changing the handwriting-related setting value, the first screen 710 for changing the setting value may include settings related to the pen type, pen thickness, pen transparency, and/or pen color.

According to an embodiment, the electronic device may display an enlarged first indicator 721 based on a touch input for adjusting the first indicator 711 included in the first screen 710 for changing the setting value.

According to an embodiment, the electronic device may display a second screen 720 for changing the setting value having an extended upper end based on the enlarged first indicator 721 being displayed. For example, the upper end of the second screen 720 may be one extended from the upper end of the first screen 710 by a first length 71.

According to an embodiment, the electronic device may move the objects 712 included in an upper area of the first indicator 711 included in the first screen 710, upward by the first length 71, based on the upper end of the screen being extended. According to an embodiment, the objects 712 included in the upper area of the first indicator 711 may include at least one of the second object, the second indicator displayed on the second object, or a plurality of objects related to the pen type.

According to an embodiment, the objects 722 included in the upper area of the enlarged first indicator 721, included in the second screen 720, may be ones moved upward by the first length 71 as compared with the objects 712 included in the first screen 710.

According to an embodiment, the electronic device may reduce the size of the enlarged first indicator 721 to the original size based on the touch being released. According to an embodiment, the electronic device may move the upper end of the second screen 720 by the first length 72, restoring it to the first screen 710.

According to an embodiment, the electronic device may move the position of the objects 722 included in the second screen 720 downward by the first length 72 as it restores to the first screen 710. According to an embodiment, the objects 712 included in the upper area of the first indicator 711 included in the restored first screen 710 may be ones moved downward by the first length 72 as compared with the objects 722 included in the second screen 720.

According to an embodiment, it is described with reference to FIG. 7 that all of the objects on the enlarged indicator are changed in position, but only the position of an adjacent object likely to overlap the enlarged indicator may be moved.

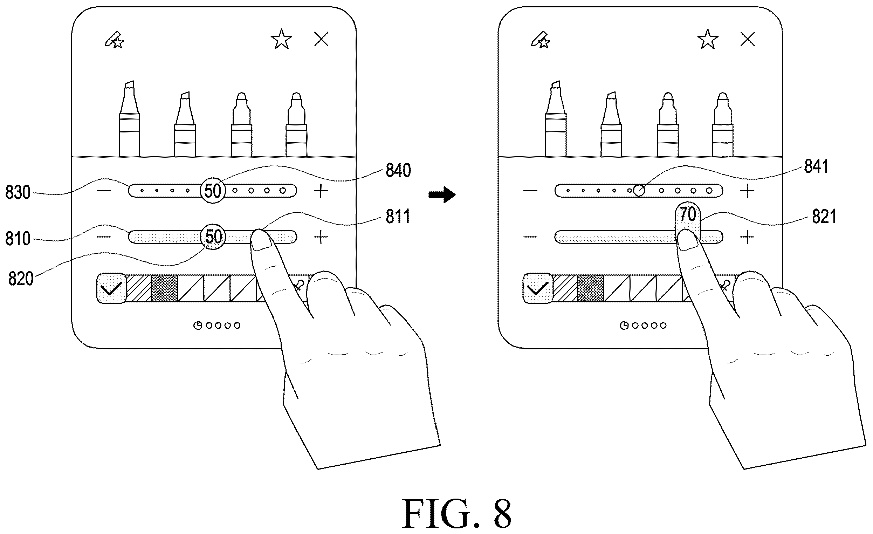

FIG. 8 is a view illustrating an operation of changing an indicator and an adjacent indicator when an area other than an indicator among objects is selected, of an electronic device according to an embodiment of the disclosure.

Referring to FIG. 8, an electronic device (e.g., an electronic device 101 of FIG. 1 or a processor 120 of FIG. 1) may display a first object 810 indicating an adjustable range of a first setting value and a first indicator 820 indicating a current first setting value on the first object 810. According to an embodiment, the electronic device may display a second object 830 indicating an adjustable range of the second setting value and a second indicator 840 indicating a current second setting value on the second object 830, in an area spaced apart from the first object 810 by a set distance. For example, the second object 830 may be disposed adjacent to the first object 810 and may be positioned above the first object 810.

According to an embodiment, upon receiving a user input 811 for selecting an area in which the first indicator 820 is not displayed of the first object 810, the electronic device may move the position of the first indicator 820 to the area in which the user input 811 is received of the first object 810.

According to an embodiment, the electronic device may display an enlarged first indicator 821 in the area where the user input 811 is received. For example, the enlarged first indicator 821 may be one extended upward. For example, the enlarged first indicator 821 may include information (e.g., text and/or image) about the current setting value in the extended area.

According to an embodiment, the electronic device may display a shrunken second indicator 841 based on the enlarged first indicator 821 being displayed.

As such, although the user touches a desired area without touching and dragging the first indicator, it is possible to move the first indicator and identify information through the enlarged first indicator and to prevent an overlap by reducing the second indicator.

FIG. 9 is a view illustrating an operation of changing an indicator when receiving a drag input departing from an object after selecting an indicator on the object, of an electronic device according to an embodiment of the disclosure.

Referring to FIG. 9, an electronic device (e.g., an electronic device 101 of FIG. 1 or a processor 120 of FIG. 1) may display a first object 910 indicating an adjustable range of a first setting value and a first indicator 920 indicating a current first setting value on the first object 910. According to an embodiment, the electronic device may display a second object 930 indicating an adjustable range of the second setting value and a second indicator 940 indicating a current second setting value on the second object 930, in an area spaced apart from the first object 910 by a set distance. For example, the second object 930 may be disposed adjacent to the first object 910 and may be positioned above the first object 910.

According to an embodiment, the electronic device may display an enlarged first indicator 921 based on receiving a touch input to the first object 910 or the first indicator 920. For example, the enlarged first indicator 921 may be one extended upward. For example, the enlarged first indicator 921 may include information (e.g., text and/or image) about the current setting value in the extended area.

According to an embodiment, the electronic device may display a shrunken second indicator 941 based on the enlarged first indicator 921 being displayed.

According to an embodiment, upon receiving a drag input 950 for departing from the first object area while maintaining the touch input in state in which the enlarged first indicator 921 is displayed, the electronic device may restore the size of the enlarged first indicator 921 and display the first indicator 920 in the original size. According to an embodiment, as the first indicator 920 in the original size is displayed, the electronic device may restore the size of the shrunken second indicator 941 and display the second indicator 940 in the original size.

According to an embodiment, when performing a drag input left and right along the direction of the first object 910 while maintaining the touch input in state in which the first indicator 920 is displayed in the original size, the electronic device may move the position of the first indicator 920 based on the drag input and adjust the setting value to correspond to the moved position. According to an embodiment, the electronic device may display, in the first indicator 920, the setting value changed in real time while the position of the first indicator 920 is moved.

As such, when the setting value is adjusted through a drag input outside the object, the indicator and information about the setting value are not hidden by the drag input, so that the electronic device may change the enlarged indicator back to the original size. According to an embodiment, since the indicator does not overlap the adjacent indicator or the movable area of the indicator based on the size of the indicator being changed back to the original size, the electronic device may increase the size of the shrunken adjacent indicator to the original size or re-display the deleted adjacent indicator.

FIG. 10 is a view illustrating an operation of determining a direction of enlarging an indicator based on a direction of a touch input, of an electronic device according to an embodiment of the disclosure.

Referring to FIG. 10, an electronic device (e.g., an electronic device 101 of FIG. 1 or a processor 120 of FIG. 1) may display a first object 1010 indicating an adjustable range of a first setting value and a first indicator 1020 indicating a current first setting value on the first object 1010. According to an embodiment, the electronic device may display a second object 1030 indicating an adjustable range of the second setting value and a second indicator 1040 indicating a current second setting value on the second object 1030, in an area spaced apart from the first object 1010 by a set distance. For example, the second object 1030 may be disposed adjacent to the first object 1010 and may be positioned under the first object 1010.

According to an embodiment, the electronic device may display an enlarged first indicator 1021 based on receiving a touch input to the first object 1010 or the first indicator 1020 through an electronic pen 20 or a finger.

According to an embodiment, when performing the touch input using a hand or the electronic pen 20, the direction of the finger, or the direction of the electronic pen 20 performing the touch input, the electronic device may determine the direction in which the size of the first indicator 1020 is to be increased based on at least one of the position which a portion of the palm touches around the touch input area or the position of a peripheral object of the touched object and display an enlarged first indicator 1021 in the determined direction. For example, when the electronic pen or finger is inclined in a first direction with respect to the touch input position, the electronic device may display the enlarged first indicator 1021 in a direction opposite to the first direction.

For example, when the electronic pen or finger is inclined in an upper direction with respect to the touch input position, the electronic device may display the enlarged first indicator 1021 in a lower direction. According to an embodiment, the first indicator 1021 enlarged downward may include information (e.g., text and/or image) about the current setting value and/or related setting value in the extended area.

According to an embodiment, when the enlarged first indicator 1021 is extended downward, it may be likely to overlap the second object 1030 or second indicator 1040 positioned under the first object. According to an embodiment, the electronic device may display a shrunken second indicator 1041.

The electronic device may display a first indicator 1041 enlarged in a direction other than the direction in which the area which a portion of the palm touches with respect to the touch input area is disposed.

According to an embodiment, the electronic device may display the first indicator 1041 increased in a direction other than the direction in which the peripheral object is disposed with respect to the touched object.

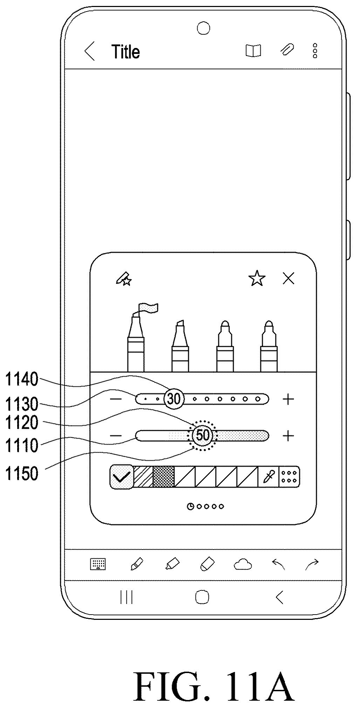

FIG. 11A is a view illustrating an operation of displaying an object and an indicator, of an electronic device according to an embodiment of the disclosure.

Referring to FIG. 11A, an electronic device (e.g., an electronic device 101 of FIG. 1 or a processor 120 of FIG. 1) may display a first object 1110 indicating an adjustable range of a first setting value and a first indicator 1120 indicating a current first setting value on the first object 1110. According to an embodiment, the electronic device may display a second object 1130 indicating an adjustable range of the second setting value and a second indicator 1140 indicating a current second setting value on the second object 1130. For example, the second object 1130 may be disposed adjacent to the first object 1110 and may be positioned above the first object 1110.

According to an embodiment, the electronic device may receive a user input 1150 to the first object 1110 or the first indicator 1120. For example, the user input 1150 may include at least one of a touch (or drag) input by the user's finger or an electronic pen, a hovering input, an input by an external electronic device (e.g., a wireless controller or a controller connected to a VR/AR device), or a gesture input (e.g., a touch input through a gesture in a virtual space).

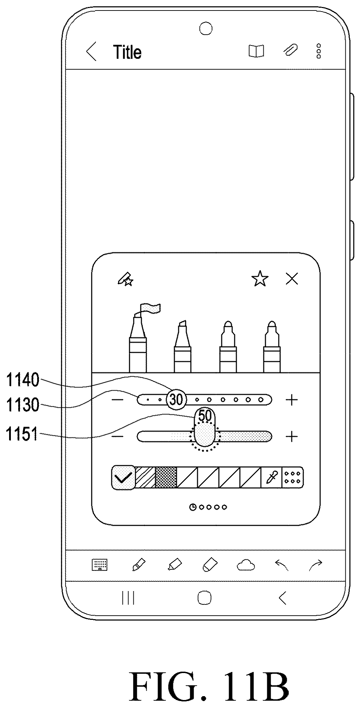

FIG. 11B is a view illustrating an indicator enlarged by a touch input, of an electronic device according to an embodiment of the disclosure.

Referring to FIG. 11B, the electronic device may display a first indicator 1151 having a first size, which has increased in size (e.g., extended upward) based on a user input 1150 to the first object or the first indicator. According to an embodiment, the electronic device may move the position of the first setting value corresponding to the position of the first indicator to the peripheral area of the user input (e.g., the user input 1150 of FIG. 11A).

Thus, at least a portion of the enlarged indicator 1151 and at least a portion of the second indicator 1140 on the second object 1130 may be likely to overlap each other.

According to an embodiment, when the enlarged first indicator 1151 does not overlap the second object 1130 and the second indicator 1140, the electronic device may maintain the size, position, color, and transparency of the second object 1130.

According to an embodiment, the electronic device may change at least one of the size, position, color, or transparency of the second indicator 1140 when the enlarged first indicator 1151 moves to overlap the second object 1130 based on a drag input.

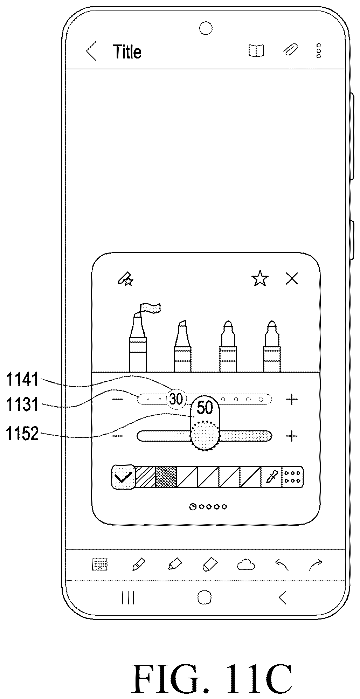

FIG. 11C is a view illustrating an indicator enlarged by a touch input, of an electronic device according to an embodiment of the disclosure.

Referring to FIG. 11C, when the touch area of a user input (e.g., a user input 1150 of FIG. 11A) is a set value (e.g., a thick finger) or more, the electronic device may display a first indicator 1152 having a second size larger than the first indicator having the first size of FIG. 11B. According to an embodiment, the first indicator 1152 having the second size may be extended (e.g., extended upward) by a longer distance than the first indicator having the first size. According to an embodiment, the first indicator 1152 having the second size may be larger in width than the first indicator having the first size.

According to an embodiment, the electronic device may change the first indicator having the first size of FIG. 11B into the first indicator 1152 having the second size based on the time during which the user input (e.g., the user input 1150 of FIG. 11A) is maintained. For example, the electronic device may change the first indicator having the first size into the first indicator 1152 having the second size when the user input is maintained for the set time or longer. According to an embodiment, the electronic device may continuously increase the size of the first indicator having the first size according to the time during which the user input is maintained, changing it into the first indicator 1152 having the second size.

According to an embodiment, when the indicator 1152 having the second size overlaps at least one of the second object 1130 and the second indicator 1140, the electronic device may maintain the size, position, color, and transparency of at least one of the second object 1130 or the second indicator 1140. For example, when the indicator 1152 having the second size overlaps the second object, the electronic device may display a transparency-increased second object 1131 and a transparency-increased second indicator 1141.

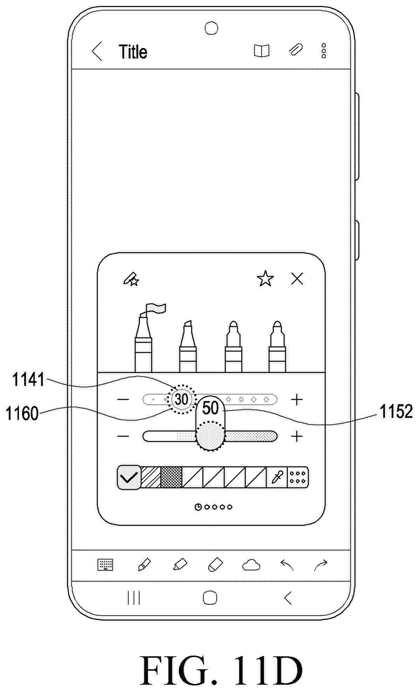

FIG. 11D is a view illustrating an operation of receiving a multi-touch in an enlarged state of an indicator based on a touch input, of an electronic device according to an embodiment of the disclosure.

Referring to FIG. 11D, the electronic device may receive a multi-touch for receiving a user input 1160 to the transparency-increased second indicator 1141 (or the second indicator 1140 of FIG. 11B) in state in which the user input to the first indicator 1152 increased to the second size (or the first indicator 1151 increased to the first size of FIG. 11B) is maintained. For example, the user input 1160 may include at least one of a touch (or drag) input by the user's finger or an electronic pen, a hovering input, an input by an external electronic device (e.g., a wireless controller or a controller connected to a VR/AR device), or a gesture input (e.g., a touch input through a gesture in a virtual space).

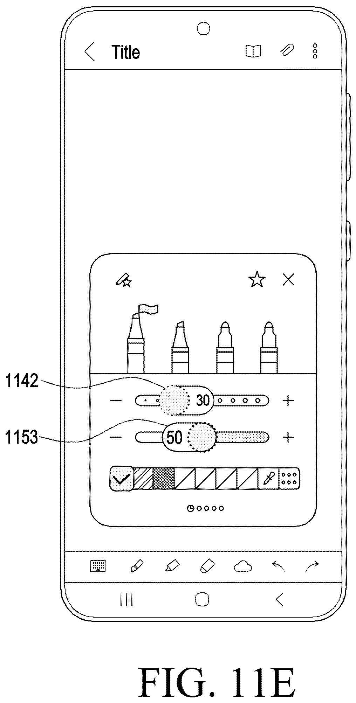

FIG. 11E is a view illustrating an operation of changing a direction of enlarging an indicator when a multi-touch is received in an enlarged state of an indicator based on a touch input, of an electronic device according to an embodiment of the disclosure.

Referring to FIG. 11E, upon identifying reception of a multi-touch as shown in FIG. 11D, the electronic device may restore the transparency of the second object (e.g., the transparency-increased second object 1131 of FIG. 11D) and the second indicator (e.g., the transparency-increased second indicator 1141 of FIG. 11D). According to an embodiment, the electronic device may change the direction of the first indicator and the direction of the second indicator into a horizontal direction (e.g., left or right) based on a user input (e.g., the user input 1150 of FIG. 11A) to the first indicator and a user input (e.g., the user input 1160 of FIG. 11D) to the second indicator, which are a multi-touch. For example, when the user input to the first indicator is made by the right hand, and the user input to the second indicator is made by the left hand, the electronic device may display a first indicator 1153 extended to the left which is opposite to the right and a second indicator 1142 extended to the right which is opposite to the left.

According to an embodiment, an electronic device may comprise a touchscreen, at least one processor, and memory storing instructions that, when executed by the at least one processor, cause the electronic device to perform following operations.

According to an embodiment, the instructions, when executed by the at least one processor individually or collectively, cause the electronic device to display, on the touchscreen, a first object indicating an adjustable range of a first setting value and a first indicator, on the first object, for displaying information about the first setting value at a first position for the first indicator.

According to an embodiment, the first indicator may be movable with respect to the first object to adjust the first setting value.

According to an embodiment, the instructions, when executed by the at least one processor individually or collectively, cause the electronic device to display, on the touchscreen, a second object indicating an adjustable range of a second setting value and a second indicator, on the second object, displaying information about the second setting value.

According to an embodiment, the second indicator may be movable with respect to the second object to adjust the second setting value.

According to an embodiment, the , when executed by the at least one processor individually or collectively, cause the electronic device to, while a touch input is maintained on the first indicator to change a position of the first indicator for the first object to change the first setting value, increase a size of the first indicator and display the information about the first setting value corresponding to a changed position of the first indicator, at a second position for the first indicator.

According to an embodiment, the second position may be different from the first position to avoid being hidden by the touch input.

According to an embodiment, the instructions, when executed by the at least one processor individually or collectively, cause the electronic device to, while the size of the first indicator is increased in response to the touch input being maintained on the first indicator, change a visual appearance of at least one of the second object or the second indicator.

According to an embodiment, the instructions, when executed by the at least one processor individually or collectively, cause the electronic device to reduce the size of the second indicator or delete the second indicator while the size of the first indicator is increased.

According to an embodiment, the instructions, when executed by the at least one processor individually or collectively, cause the electronic device to move a position of the second object and the second indicator while the size of the first indicator is increased.

According to an embodiment, the instructions, when executed by the at least one processor individually or collectively, cause the electronic device to increase transparency of the second object and the second indicator while the size of the first indicator is increased.

According to an embodiment, the instructions, when executed by the at least one processor individually or collectively, cause the electronic device to further display, at the second position, at least one piece of information related to the first setting value corresponding to the changed position of the first indicator.

According to an embodiment, the instructions, when executed by the at least one processor individually or collectively, cause the electronic device to, after the size of the first indicator is increased, based on receiving a drag input that moves the position of the touch input to an area outside the first object and the first indicator while maintaining the touch input, reduce the size of the first indicator from the increased size to an original size.

According to an embodiment, the instructions, when executed by the at least one processor individually or collectively, cause the electronic device to move the first indicator of the original size based on the drag input.

According to an embodiment, the instructions, when executed by the at least one processor individually or collectively, cause the electronic device to determine a size to which the first indicator to be increased based on a size of an area of the touch input on the touchscreen.

According to an embodiment, the instructions, when executed by the at least one processor individually or collectively, cause the electronic device to increase the first indicator to the determined size.

According to an embodiment, the instructions, when executed by the at least one processor individually or collectively, cause the electronic device to, based on receiving a touch input to the first object except for the first indicator, move the first indicator to an area where the touch input is received and increase the size of the first indicator moved to the area where the touch input is received.

According to an embodiment, the instructions, when executed by the at least one processor individually or collectively, cause the electronic device to, in response to receiving a drag input that moves the position of the touch input while the touch input to the first indicator is maintained, increase the size of the first indicator.

According to an embodiment, the instructions, when executed by the at least one processor individually or collectively, cause the electronic device to determine a direction in which the size of the first indicator is to be increased, based on a direction of a hand or an electronic pen related to the touch input.

According to an embodiment, the instructions, when executed by the at least one processor individually or collectively, cause the electronic device to increase the size of the first indicator.

According to an embodiment, a method for controlling an electronic device may comprise displaying, on a touchscreen of the electronic device, a first object indicating an adjustable range of a first setting value and a first indicator, on the first object, for displaying information about the first setting value at a first position for the first indicator.

According to an embodiment, the first indicator may be movable with respect to the first object to adjust the first setting value.

According to an embodiment, the method for controlling the electronic device may comprise displaying, on the touchscreen, a second object indicating an adjustable range of a second setting value and a second indicator, on the second object, displaying information about the second setting value.

According to an embodiment, the second indicator may be movable with respect to the second object to adjust the second setting value.

According to an embodiment, the method for controlling the electronic device may comprise, while a touch input is maintained on the first indicator to change a position of the first indicator for the first object to change the first setting value, increasing a size of the first indicator;

According to an embodiment, the method for controlling the electronic device may comprise displaying the information about the first setting value corresponding to the changed position of the first indicator, at a second position for the first indicator.

According to an embodiment, the second position may be different from the first position to avoid being hidden by the touch input.

According to an embodiment, the method for controlling the electronic device may comprise, while the size of the first indicator is increased in response to the touch input being maintained on the first indicator, changing a visual appearance of at least one of the second object or the second indicator.

According to an embodiment, changing the visual appearance of the at least one of the second object or the second indicator may reduce the size of the second indicator or delete the second indicator while the size of the first indicator is increased.

According to an embodiment, changing the visual appearance of the at least one of the second object or the second indicator may move a position of the second object and the second indicator while the size of the first indicator is increased.

According to an embodiment, changing the visual appearance of the at least one of the second object or the second indicator may increase transparency of the second object and the second indicator while the size of the first indicator is increased.

According to an embodiment, displaying the information about the first setting value corresponding to the changed position of the first indicator, at the second position for the first indicator may display, at the second position, at least one piece of information related to the first setting value corresponding to the changed position of the first indicator.

According to an embodiment, the method for controlling the electronic device may comprise, after the size of the first indicator is increased, based on receiving a drag input that moves the position of the touch input to an area outside the first object and the first indicator while maintaining the touch input, reducing the size of the first indicator from the increased size to an original size.

According to an embodiment, the method for controlling the electronic device may comprise moving the first indicator of the original size based on the drag input.

According to an embodiment, increasing the size of the first indicator may determine a size to which the first indicator to be increased based on a size of an area of the touch input on the touchscreen.

According to an embodiment, increasing the size of the first indicator may increase the first indicator to the determined size.

According to an embodiment, increasing the size of the first indicator may, based on receiving a touch input to the first object except for the first indicator, move the first indicator to an area where the touch input is received and increase the size of the first indicator moved to the area where the touch input is received.

According to an embodiment, increasing the size of the first indicator may, in response to receiving a drag input that moves the position of the touch input while the touch input to the first indicator is maintained, increase the size of the first indicator.

According to an embodiment, increasing the size of the first indicator may include determining a direction in which the size of the first indicator is to be increased, based on a direction of a hand or an electronic pen related to the touch input.

According to an embodiment, increasing the size of the first indicator may include increasing the size of the first indicator in the determined direction.

According to an embodiment, in one or more non-transitory computer-readable recording media storing one or more computer programs, the one or more computer programs includes instructions that, when executed by one or more processors of an electronic device individually or collectively, cause the electronic device to display, on a touchscreen of an electronic device, a first object indicating an adjustable range of a first setting value and a first indicator indicating a current first setting value on the first object and for adjusting the first setting value.

According to an embodiment, the one or more programs may comprise instructions enabling the electronic device to display, on a touchscreen of the electronic device, a first object indicating an adjustable range of a first setting value and a first indicator, on the first object, for displaying information about the first setting value at a first position for the first indicator.

According to an embodiment, the first indicator may be movable with respect to the first object to adjust the first setting value.

According to an embodiment, the one or more programs may comprise instructions enabling the electronic device to display, on the touchscreen, a second object indicating an adjustable range of a second setting value and a second indicator, on the second object, displaying information about the second setting value.

According to an embodiment, the second indicator may be movable with respect to the second object to adjust the second setting value.

According to an embodiment, the one or more programs may comprise instructions enabling the electronic device to, while a touch input is maintained on the first indicator to change a position of the first indicator for the first object to change the first setting value, increase a size of the first indicator and display the information about the first setting value corresponding to a changed position of the first indicator, at a second position for the first indicator.

According to an embodiment, the second position may be different from the first position to avoid being hidden by the touch input.

According to an embodiment, the one or more programs may comprise instructions enabling the electronic device to, while the size of the first indicator is increased in response to the touch input being maintained on the first indicator, change a visual appearance of at least one of the second object or the second indicator.

According to an embodiment, the one or more programs may include instructions that enable the electronic device to reduce the size of the second indicator or delete the second indicator while the size of the first indicator is increased.

According to an embodiment, the one or more programs may include instructions that enable the electronic device to move a position of the second object and the second indicator while the size of the first indicator is increased.

According to an embodiment, the one or more programs may include instructions that enable the electronic device to increase transparency of the second object and the second indicator while the size of the first indicator is increased.

According to an embodiment, the one or more programs may include instructions that enable the electronic device to further display, at the second position, at least one piece of information related to the first setting value corresponding to the changed position of the first indicator.

According to an embodiment, the one or more programs may include instructions that enable the electronic device to, after the size of the first indicator is increased, based on receiving a drag input that moves the position of the touch input to an area outside the first object and the first indicator while maintaining the touch input, reduce the size of the first indicator from the increased size to an original size.

According to an embodiment, the one or more programs may include instructions that enable the electronic device to move the first indicator of the original size based on the drag input.

According to an embodiment, the one or more programs may include instructions that enable the electronic device to determine a size to which the first indicator to be increased based on a size of an area of the touch input on the touchscreen.

According to an embodiment, the one or more programs may include instructions that enable the electronic device to increase the first indicator to the determined size.

According to an embodiment, the one or more programs may include instructions that enable the electronic device to, based on receiving a touch input to the first object except for the first indicator, move the first indicator to an area where the touch input is received and increase the size of the first indicator moved to the area where the touch input is received.

According to an embodiment, the one or more programs may include instructions that enable the electronic device to, in response to receiving a drag input that moves the position of the touch input while the touch input to the first indicator is maintained, increase the size of the first indicator.

According to an embodiment, the one or more programs may include instructions that enable the electronic device to determine a direction in which the size of the first indicator is to be increased, based on a direction of a hand or an electronic pen related to the touch input.

According to an embodiment, the one or more programs may include instructions that enable the electronic device to increase the size of the first indicator in the determined direction.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that various embodiments of the disclosure according to the claims and description in the specification can be realized in the form of hardware, software or a combination of hardware and software.

Any such software may be stored in non-transitory computer readable storage media. The non-transitory computer readable storage media store one or more computer programs (software modules), the one or more computer programs include computer-executable instructions that, when executed by one or more processors of an electronic device individually or collectively, cause the electronic device to perform a method of the disclosure.

Any such software may be stored in the form of volatile or non-volatile storage such as, for example, a storage device like read only memory (ROM), whether erasable or rewritable or not, or in the form of memory such as, for example, random access memory (RAM), memory chips, device or integrated circuits or on an optically or magnetically readable medium such as, for example, a compact disk (CD), digital versatile disc (DVD), magnetic disk or magnetic tape or the like. It will be appreciated that the storage devices and storage media are various embodiments of non-transitory machine-readable storage that are suitable for storing a computer program or computer programs comprising instructions that, when executed, implement various embodiments of the disclosure. Accordingly, various embodiments provide a program comprising code for implementing apparatus or a method as claimed in any one of the claims of this specification and a non-transitory machine-readable storage storing such a program.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic device, comprising:
a touchscreen;
at least one processor; and
memory storing instructions that, when executed by the at least one processor individually or collectively, cause the electronic device to:
display, on the touchscreen, a first object indicating an adjustable range of a first setting value and a first indicator, on the first object, for displaying information about the first setting value at a first position for the first indicator, wherein the first indicator is movable with respect to the first object to adjust the first setting value,
display, on the touchscreen, a second object indicating an adjustable range of a second setting value and a second indicator, on the second object, displaying information about the second setting value, wherein the second indicator is movable with respect to the second object to adjust the second setting value,
while a touch input is maintained on the first indicator to change a position of the first indicator for the first object to change the first setting value, increase a size of the first indicator and display the information about the first setting value corresponding to a changed position of the first indicator, at a second position for the first indicator, wherein the second position is different from the first position to avoid being hidden by the touch input, and
while the size of the first indicator is increased in response to the touch input being maintained on the first indicator, change a visual appearance of at least one of the second object or the second indicator.

2. The electronic device of claim 1, wherein the instructions, when executed by the at least one processor individually or collectively, cause the electronic device to reduce the size of the second indicator or delete the second indicator while the size of the first indicator is increased.

3. The electronic device of claim 1 or 2, wherein the instructions, when executed by the at least one processor individually or collectively, cause the electronic device to move a position of the second object and the second indicator while the size of the first indicator is increased.

4. The electronic device of any one of claims 1 to 3, wherein the instructions, when executed by the at least one processor individually or collectively, cause the electronic device to increase transparency of the second object and the second indicator while the size of the first indicator is increased.

5. The electronic device of any one of claims 1 to 4, wherein the instructions, when executed by the at least one processor individually or collectively, cause the electronic device to display, at the second position, at least one piece of information related to the first setting value corresponding to the changed position of the first indicator.

6. The electronic device of any one of claims 1 to 5, wherein the instructions, when executed by the at least one processor individually or collectively, cause the electronic device to:
after the size of the first indicator is increased, based on receiving a drag input that moves the position of the touch input to an area outside the first object and the first indicator while maintaining the touch input, reduce the size of the first indicator from the increased size to an original size; and
move the first indicator of the original size based on the drag input.

7. The electronic device of any one of claims 1 to 6, wherein the instructions, when executed by the at least one processor individually or collectively, cause the electronic device to:
determine a size to which the first indicator to be increased based on a size of an area of the touch input on the touchscreen; and
increase the first indicator to the determined size.

8. The electronic device of any one of claims 1 to 7, wherein the instructions, when executed by the at least one processor individually or collectively, cause the electronic device to, based on receiving a touch input to the first object except for the first indicator, move the first indicator to an area where the touch input is received and increase the size of the first indicator moved to the area where the touch input is received.

9. The electronic device of any one of claims 1 to 7, wherein the instructions, when executed by the at least one processor individually or collectively, cause the electronic device to, in response to receiving a drag input that moves the position of the touch input while the touch input to the first indicator is maintained, increase the size of the first indicator.

10. The electronic device of any one of claims 1 to 9, wherein the instructions, when executed by the at least one processor individually or collectively, cause the electronic device to:
determine a direction in which the size of the first indicator is to be increased, based on a direction of a hand or an electronic pen related to the touch input; and
increase the size of the first indicator in the determined direction.

11. A method for controlling an electronic device, the method comprising:
displaying, on a touchscreen of the electronic device, a first object indicating an adjustable range of a first setting value and a first indicator, on the first object, for displaying information about the first setting value at a first position for the first indicator, wherein the first indicator is movable with respect to the first object to adjust the first setting value;
displaying, on the touchscreen, a second object indicating an adjustable range of a second setting value and a second indicator, on the second object, displaying information about the second setting value, wherein the second indicator is movable with respect to the second object to adjust the second setting value;
while a touch input is maintained on the first indicator to change a position of the first indicator for the first object to change the first setting value, increasing a size of the first indicator;
displaying the information about the first setting value corresponding to the changed position of the first indicator, at a second position for the first indicator, wherein the second position is different from the first position to avoid being hidden by the touch input; and
while the size of the first indicator is increased in response to the touch input being maintained on the first indicator, changing a visual appearance of at least one of the second object or the second indicator.

12. The method of claim 11, wherein the changing of the visual appearance of the at least one of the second object or the second indicator comprises reducing the size of the second indicator or deletes the second indicator while the size of the first indicator is increased.

13. The method of claim 11 or 12, wherein the changing of the visual appearance of the at least one of the second object or the second indicator comprises moving a position of the second object and the second indicator while the size of the first indicator is increased.

14. The method of any one of claims 11 to 13, wherein the changing of the visual appearance of the at least one of the second object or the second indicator comprises increasing transparency of the second object and the second indicator while the size of the first indicator is increased.

15. The method of any one of claims 11 to 14, wherein the displaying of the information about the first setting value corresponding to the changed position of the first indicator, at the second position for the first indicator comprises displaying, at the second position, at least one piece of information related to the first setting value corresponding to the changed position of the first indicator.
